# EUROPÄISCHE PATENTSCHRIFT

(11) **EP 1 110 859 B1**
(45) Veröffentlichungstag und Bekanntmachung des Hinweises auf die Patenterteilung: **29.06.2005**
(21) Anmeldenummer: 00126341.7
(22) Anmeldetag: 02.12.2000
(51) Int. Cl.: B64C 1/14

(54) **Kabinenfenster für Passagierkabinen, insbesondere in einem Verkehrsflugzeug**
Cabin window for passenger aircraft
Fenêtre pour cabine d'avion de passagers

(30) Priorität: 23.12.1999 DE 19962489
(43) Veröffentlichungstag der Anmeldung: 27.06.2001
(73) Patentinhaber: Airbus Deutschland GmbH, 21129 Hamburg (DE)
(72) Erfinder: Lau, Michael, 21739 Dollern (DE); Schaich, Sven, 21629 Neu Wulmstorf (DE)
(74) Vertreter: Hansmann, Dierk, Dipl.-Ing.

(56) Entgegenhaltungen:
- US-A- 4 015 394
- PATENT ABSTRACTS OF JAPAN vol. 1999, no. 01, 29. Januar 1999 (1999-01-29) & JP 10 266733 A (FIGURA KK), 6. Oktober 1998 (1998-10-06)

## Beschreibung

Die Erfindung betrifft ein Kabinenfenster für Passagierkabinen, insbesondere in einem Verkehrsflugzeug, wobei das Kabinenfenster im wesentlichen eine Außenscheibe und eine Innenscheibe aufweist, zwischen denen ein Scheibenzwischenraum gebildet ist und am Randbereich des Scheibenzwischenraumes ein Rahmen angeordnet ist.

In herkömmlichen Passagierkabinen in einem Verkehrsflugzeug finden Kabinenfenster Anwendung, die aufgrund der auftretenden Druckunterschiede während des Fluges und aufgrund der einem Innendruck ausgesetzten Flugzeugrumpf druckdicht ausgeführt sein müssen. Üblich ist es dabei, einzeln eingesetzte, kleine Außenfenster zu verwenden, um eine Schwächung der Rumpfstruktur so gering wie möglich zu halten. Solche Kabinenfenster sind beispielsweise in DE-AS 1 252 533, DD 23 321 oder US-A-4 541 595, welche als nächstliegender Stand der Technik betrachtet wird, beschrieben. Sie weisen eine Außenscheibe und eine Innenscheibe auf, zwischen denen ein Scheibenzwischenraum gebildet ist und am Randbereich des Scheibenzwischenraumes ein Rahmen angeordnet ist. Dieser Rahmen wird üblicherweise als Fenstertrichter bezeichnet, da er von der kleinen Außenscheibe ausgehend sich aufweitet und am Randbereich der Innenscheibe, die eine größere Fläche als die Außenscheibe aufweist, endet. Die Innenscheibe ist ein Teil der Passagierkabine und der Abstand zwischen der Außenscheibe und der Innenscheibe ist aufgrund der Bautiefe zwischen Flugzeugaußenhaut und der Innenverkleidung der Passagierkabine vorgegeben. Die Bautiefe des Fenstertrichters kann insbesondere bei Großraumflugzeugen so groß sein, daß aufgrund der entstehenden "Trichterwirkung" die Außenfenster extrem klein erscheinen und eine beengende Wirkung auf die Passagiere haben. Die Passagierkabine wirkt demgemäß insbesondere auf Passagiere mit Klaustrophobie negativ und kann Furcht und Panik auslösen.

Der Erfindung liegt daher die Aufgabe zugrunde, ein gattungsgemäßes Kabinenfenster so auszubilden, das eine beengende Wirkung einer Flugzeugkabine vermieden wird und trotz kleiner Fenstergröße der Außenfenster und großer Bautiefe des Fenstertrichters die tatsächlichen Abmessungen kaschiert werden und ein großzügiger Raumeindruck erreicht wird.

Diese Aufgabe wird bei einem gattungsgemäßen Kabinenfenster mit den im Patentanspruch 1 genannten Maßnahmen gelöst.

Dabei ist insbesondere von Vorteil, daß ein optischer Eindruck entsteht, mit der die Fenstergröße scheinbar vergrößert und die Bautiefe kaschiert wird. Ein beengender Eindruck der Passagierkabine kann somit vermieden werden.

Weiterbildungen und vorteilhafte Ausgestaltungen sind in den Unteransprüchen 2 bis 4 angegeben.

In der Zeichnung ist ein Ausführungsbeispiel der Erfindung dargestellt, das nachstehend anhand der Figuren 1 bis 3 näher beschrieben wird. In den Figuren sind gleiche Bauteile mit gleichen Bezugszeichen versehen.

Die Zeichnung zeigt im einzelnen:
- Fig. 1: einen Ausschnitt einer Passagierkabine eines Flugzeuges mit Kabinenfenstern,
- Fig. 2: ein erfindungsgemäßes Kabinenfenster in einer Perspektivdarstellung und
- Fig. 3: einen Querschnitt durch einen Flugzeugrumpfbereich mit eingebautem Kabinenfenster.

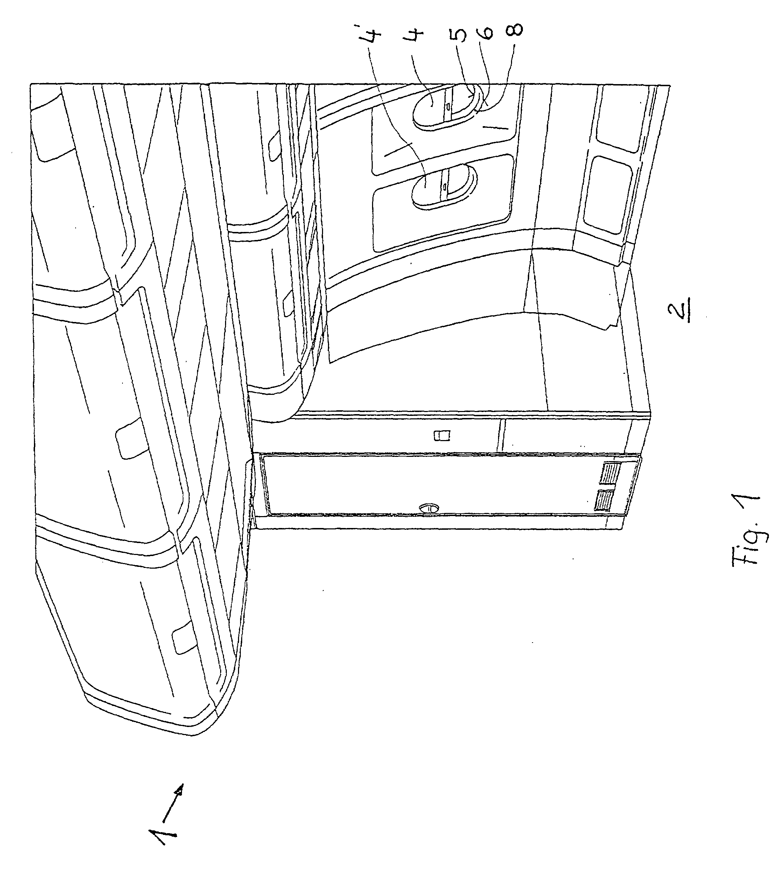

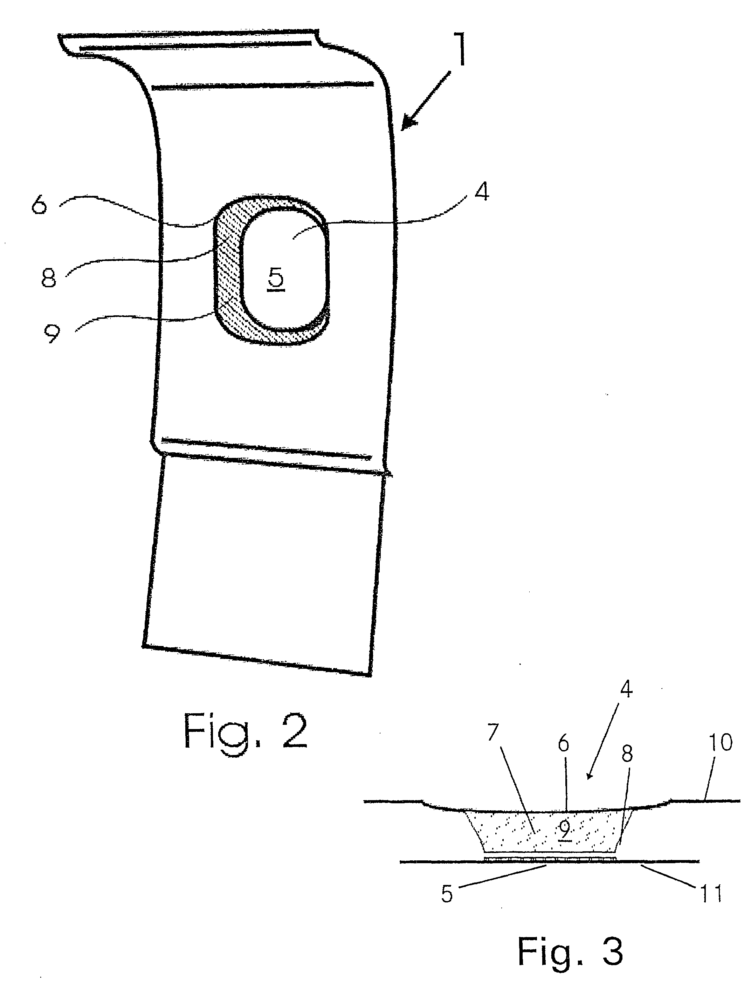

In Fig. 1 ist ein Teilbereich einer Passagierkabine 1 eines Verkehrsflugzeuges in perspektivischer Darstellung ersichtlich. Dieser Teil der Passagierkabine 1 weist eine Kabinenenraum 2 auf, in dem in bekannter Art Sitzreihen (nicht gezeigt) angeordnet sind. Oberhalb der Sitzreihen sind Gepäckablagen 3 vorgesehen, die zum Unterbringen des Handgepäcks dienen. An der Außenwand der Passagierkabine 1 sind Kabinenfenster 4 bzw. 4' vorgesehen. Üblicherweise sind die Kabinenfenster 4 bzw. 4' usw. so im Flugzeugrumpf angeordnet, daß entsprechend einer Sitzreihe ein Kabinenfenster 4 bzw. 4' zugeordnet ist. Sie weisen jeweils eine Außenscheibe 5 und eine Innenscheibe 6 auf, zwischen denen ein Scheibenzwischenraum 7 gebildet ist. Am Randbereich des Scheibenzwischenraumes ist ein Rahmen 8 angeordnet. Dieser Rahmen 8 wird üblicherweise als Fenstertrichter bezeichnet, da er von der kleinen Außenscheibe 5 ausgehend sich aufweitet und am Randbereich der Innenscheibe 6, die eine größere Fläche als die Außenscheibe aufweist, endet.
Zur näheren Erläuterung ist in Fig. 2 das Kabinenfenster 4 in einer vergrößerten Darstellung und in Fig. 3 ein Querschnitt durch ein Kabinenfenster 4 gezeigt. Die Innenscheibe 6 ist ein Teil der Passagierkabine 1 und der Abstand zwischen der Außenscheibe 5 und der Innenscheibe 6 ist aufgrund der Bautiefe zwischen der Flugzeugaußenhaut 11 und der Innenverkleidung 10 der Passagierkabine 1 vorgegeben. Um diese tatsächliche Bautiefe optisch zu minimieren und die tatsächliche, recht kleine Fenstergröße des Außenfensters optisch zu vergrößern wird erfindungsgemäß vorgeschlagen, auf den Rahmen 8 eine spiegelnde Beschichtung 9 aufzubringen. Die spiegelnde Beschichtung 9 kann durch das Aufbringen einer Chrom-Schicht, das Bedampfen mit spiegelnden Materialien oder durch das Aufbringen einer Spiegelfolie erreicht werden. Es können weitere üblicherweise bekannte Verfahren sowie alle möglichen spiegelnden Materialien Anwendung finden. Mit der spiegelnden Schicht 9 wird erreicht, daß sich die äußere Umgebung auf der Schicht 9 des Rahmens 8 reflektiert und somit der optische Eindruck entsteht, daß dieses Bauteil noch zur Außenumgebung gehört und somit die Fenstergröße scheinbar vergrößert.

## Patentansprüche

1. Flugzeugkabinenfenster (4), insbesondere in einem Verkehrsflugzeug, wobei das Kabinenfenster (4) besteht aus einer Außenscheibe (5) und einer Innenscheibe (6) und die Innenscheibe (6) eine größere Fläche als die Außenscheibe (5) aufweist sowie zwischen den Scheiben (5, 6) ein Scheibenzwischeriraum (7) gebildet ist und am Randbereich des Scheibenzwischenraumes (7) ein Fenstertrichter (8) als Rahmen angeordnet ist, der sich ausgehend von der Außenscheibe (5) aufweitet, **dadurch gekennzeichnet, daß** der Fenstertrichter (8) zumindest im sichtbaren Bereich des Scheibenzwischenraumes (7) mit einer spiegelnden Schicht (9) versehen ist, wobei eine optische Vergrößerung des relativ kleinen Außenfensters erreicht wird.

2. Kabinenfenster nach Anspruch 1, **dadurch gekennzeichnet, daß** die Schicht (9) aus einer Chrom-Schicht gebildet ist.

3. Kabinenfenster nach Anspruch 1, **dadurch gekennzeichnet, daß** die Schicht (9) aus einer Metallfolie gebildet ist.

4. Kabinenfenster nach einem der Ansprüche 1 bis 3, **dadurch gekennzeichnet, daß** spiegelnde Materialien auf den Rahmen aufgedampft werden.

## Claims

1. Aircraft-cabin window (4), particularly in a passenger aircraft, wherein said cabin window (4) consists of an outer pane (5) and an inner pane (6) and said inner pane (6) has a larger area than said outer pane (5) and an interstice (7) is also formed between said panes (5, 6), and there is disposed as a frame, at the edge region of the interstice (7) between the panes, a window funnel (8) which widens out, starting from the outer pane (5),
**characterised in that** the window funnel (8) is provided, at least in the visible region of the interstice (7) between the panes, with a reflective layer (9), under which circumstances an enlargement, from the visual point of view, of the relatively small outer window is achieved.

2. Cabin window according to claim 1,
**characterised in that** the layer (9) is formed from a chromium coating.

3. Cabin window according to claim 1,
**characterised in that** the layer (9) is formed from a metal film.

4. Cabin window according to one of claims 1 to 3,
**characterised in that** reflective materials are vapour-deposited onto the frame.

## Revendications

1. Fenêtre de cabine d'avion (4), notamment dans un avion de ligne, la fenêtre de cabine d'avion (4) comprenant une vitre extérieure (5) et une vitre intérieure (6), la vitre intérieure (6) présentant une surface plus grande que la vitre extérieure (5), un espace intercalaire (7) étant formé entre les vitres (5, 6) et une trémie de fenêtre (8) qui s'évase à partir de la vitre extérieure (5), étant disposée en tant que cadre dans la région du bord de l'espace intercalaire (7), **caractérisé par le fait que** la trémie de fenêtre (8), au moins dans la partie visible de l'espace intercalaire (7) est revêtue d'une couche réfléchissante (9), un effet d'agrandissement optique de la fenêtre extérieure relativement petite étant ainsi obtenu.

2. Fenêtre de cabine d'avion selon revendication 1, **caractérisé par le fait que** la couche (9) est formée d'une couche de chrome.

3. Fenêtre de cabine d'avion selon revendication 1, **caractérisé par le fait que** la couche (9) est formée d'une feuille métallique.

4. Fenêtre de cabine d'avion selon une des revendications 1 à 3, **caractérisé par le fait que** des matériaux réfléchissants sont déposés sur le cadre par un procédé de dépôt en phase vapeur.
